# EUROPEAN PATENT APPLICATION

(11) **EP 4 818 952 A1**
(43) Date of publication of application: **07.10.2026**
(21) Application number: 24910703.8
(22) Date of filing: 10.12.2024
(51) Int. Cl.: G06F 21/62

(54) **METHOD AND SYSTEM FOR PROTECTING USER PRIVACY, AND STORAGE MEDIUM AND PROGRAM PRODUCT**

(30) Priority: 30.12.2023 CN 202311859590
(71) Applicant: Shanghai Xiyu Jizhi Technology Co., Ltd., Shanghai 200233 (CN)
(72) Inventor: YU, Lianfei, Shanghai 200233 (CN); ZHANG, Mozhi, Shanghai 200233 (CN)
(74) Representative: Vogelbruch, Keang
(86) International application number: PCT/CN2024/138198
(87) International publication number: WO 2025/139772

(57) **Abstract**

The embodiments of the specification relate to the technical field of information security. Disclosed are a method and system for protecting user privacy, and a storage medium and a program product. The method comprises: on the basis of first data input by a user, acquiring personal information related to the user; determining privacy information from the personal information; performing encoding processing on the privacy information, so as to obtain an encoded vector corresponding to the privacy information; and obtaining second data generated on the basis of the encoded vector and at least some information in the first data, wherein the second data comprises personalized reply content corresponding to the first data. By means of the method, not only can corresponding personalized reply content be generated on the basis of personal information including user privacy information, but user privacy leakage caused during information usage can also be prevented, thereby improving the security of the user privacy information while improving the accuracy of a personalized interaction service.

## Description

### CROSS-REFERENCE TO RELATED APPLICATIONS

The present application claims priority to Chinese Patent Application No. 2023118595909, filed with the China National Intellectual Property Administration on December 30, 2023, and entitled "METHOD AND SYSTEM FOR PROTECTING USER PRIVACY, AND STORAGE MEDIUM AND PROGRAM PRODUCT", the entire contents of which are incorporated herein by reference.

### TECHNICAL FIELD

The present invention relates to the technical field of information security, and specifically, relates to a method, a system, a storage medium, and a computer program product, configured to protect user privacy in a personalized interaction service.

### BACKGROUND

With the development of artificial intelligence technology, intelligent interaction services are increasingly being applied to various fields, such as role-playing intelligent chat, intelligent question answering, intelligent customer service, voice assistants, and the like. These services may acquire personal information of users so as to provide more precise and more personalized services for the users. However, with the frequent occurrence of personal information leakage incidents, how to protect user privacy information while providing personalized services has become an urgent problem to be solved.

In view of the above, it is necessary to provide a method and system capable of protecting user privacy in a personalized interaction service, so as to prevent leakage of user privacy information while achieving personalized services.

### SUMMARY

To solve the above problems, one aspect of embodiments of the specification provides a method configured to protect user privacy in a personalized interaction service, the method comprising: acquiring personal information related to a user on the basis of first data input by the user; determining privacy information from the personal information; performing encoding processing on the privacy information, so as to obtain an encoded vector corresponding to the privacy information; and obtaining second data generated on the basis of the encoded vector and at least some information in the first data, the second data comprising personalized reply content corresponding to the first data.

Another aspect of the embodiments of the specification also provides a method configured to protect user privacy in a personalized interaction service, the method comprising: receiving an encoded vector and at least some information in first data input by a user, wherein the encoded vector is obtained by encoding the privacy information of the user; processing the encoded vector and the at least some information in the first data by means of a trained second model, so as to obtain second data; and sending the second data, so as to present personalized reply content corresponding to question information comprised in the first data to the user.

Another aspect of the embodiments of the specification also provides a system configured to protect user privacy in a personalized interaction service, the system comprising: a personal information acquisition module configured to acquire personal information related to the user on the basis of first data input by the user; a privacy information determination module configured to determine privacy information from the personal information; an encoding module configured to perform encoding processing on the privacy information, so as to obtain an encoded vector corresponding to the privacy information; and a reply content acquisition module configured to obtain second data generated on the basis of the encoded vector and at least some information in the first data, the second data comprising personalized reply content corresponding to the first data.

Another aspect of the embodiments of the specification also provides a system configured to protect user privacy in a personalized interaction service, the system comprising: a receiving module configured to receive an encoded vector and at least some information in first data input by a user, wherein the encoded vector is obtained by encoding the privacy information of the user; a processing module configured to process the encoded vector and the at least some information in the first data by means of a trained second model, so as to obtain second data; and a sending module configured to send the second data, so as to present personalized reply content corresponding to question information comprised in the first data to the user.

Another aspect of the embodiments of the specification also provides a system configured to protect user privacy in a personalized interaction service, the system comprising: a personal information acquisition module configured to acquire personal information related to the user on the basis of first data input by the user; a privacy information determination module configured to determine privacy information from the personal information; an encoding module configured to perform encoding processing on the privacy information, so as to obtain an encoded vector corresponding to the privacy information; a processing module configured to process the encoded vector and the at least some information in the first data by means of a trained second model, so as to obtain second data, the second data comprising personalized reply content corresponding to the first data; and a display module configured to present the personalized reply content comprised in the second data to the user.

Another aspect of the embodiments of the specification also provides a computer-readable storage medium, the storage medium storing computer instructions which, when executed by a processor, implement the method according to any one of the above.

Another aspect of the embodiments of the specification also provides a computer program product, comprising a computer program or instructions which, when executed by a processor, implement the method according to any one of the above.

Additional features will be set forth in part in the following description. These features will become apparent to those skilled in the art by examining the following descriptions and drawings, or may be learned by the production or operation of examples. The features of the specification can be realized and attained by practicing or using the methods, instrumentalities, and combinations set forth in the following detailed examples.

### BRIEF DESCRIPTION OF THE DRAWINGS

The present specification will be further described by way of exemplary embodiments, which will be described in detail through the drawings. These embodiments are not limiting, and in these embodiments, the same reference numerals denote the same steps or structures.
FIG. 1 is a schematic diagram of an exemplary application scenario of a system configured to protect user privacy in a personalized interaction service according to some embodiments of the specification.
FIG. 2 is an exemplary module diagram of a system configured to protect user privacy in a personalized interaction service according to some embodiments of the specification.
FIG. 3 is an exemplary module diagram of a system configured to protect user privacy in a personalized interaction service according to other embodiments of the specification.
FIG. 4 is an exemplary module diagram of a system configured to protect user privacy in a personalized interaction service according to other embodiments of the specification.
FIG. 5 is an exemplary flow chart of a method configured to protect user privacy in a personalized interaction service according to some embodiments of the specification.
FIG. 6 is an exemplary flow chart of a method configured to protect user privacy in a personalized interaction service according to other embodiments of the specification.

### DETAILED DESCRIPTION OF THE EMBODIMENTS

In order to more clearly illustrate the technical solutions of the embodiments of the specification, a brief introduction to the drawings to be used in the description of the embodiments will be given below. It is obvious that the drawings in the following description are merely some examples or embodiments of the specification, and for those of ordinary skill in the art, other similar scenarios can be derived from these drawings without inventive efforts. Unless otherwise apparent from the linguistic context or otherwise stated, the same reference numerals in the drawings denote the same structures or operations.

It should be understood that "system", "device", "unit", and/or "module" as used in the specification are a method for distinguishing different components, elements, parts, sections, or assemblies at different levels. However, if other words can achieve the same purpose, the words can be replaced by other expressions.

As shown in the specification and the claims, unless the context clearly indicates an exception, the words "a", "an", and/or "the" are not specifically referring to the singular and may also include the plural. Generally, the terms "comprise" and "contain" merely indicate that steps and elements that have been explicitly identified are included, and these steps and elements do not constitute an exclusive listing, and the method or device may also contain other steps or elements.

Flow charts are used in the specification to illustrate operations executed by a system according to embodiments of the specification. It should be understood that the preceding or following operations are not necessarily executed precisely in order. On the contrary, the various steps can be processed in reverse order or simultaneously. Meanwhile, other operations can also be added to these processes, or one or several operations can be removed from these processes.

Taking role-playing intelligent chat (which can also be called personalized chat) as an example, text data and/or voice data input by a user can be processed by means of a data processing model pre-configured in a user terminal 110 and/or a service terminal 120, and interaction can be performed with the user in different roles according to an identity set by the user. For example, the model can chat with the user in a doctor/lawyer/teacher identity, chat with the user in an ancient figure identity, or chat with the user in a fictional character (which can be a character created by the user or a character in anime/animation) identity, and the like. It can be understood that if an interaction product (such as a large model configured for question answering) knows a certain real identity or personal information of the user (which can be real information of the user or fictional information of the user), more precise and more personalized interaction services can be provided, making the chat more realistic and the user more immersed during the interaction process, thereby achieving the purpose of improving user experience.

By way of example, in some embodiments, the user terminal 110 and/or the service terminal 120 can acquire information such as the age, name, preferences, graduating institution, occupation, romantic history, and medical history of the user, and then input this information into a model. Further, the model can analyze this information and conduct question answering dialogues with the user according to an analysis result.

However, from the perspective of the user, the user may not want his/her personal information to be transmitted to a service end (for example, the service terminal 120). Therefore, how to protect user privacy while using the real information of the user for personalized interaction is particularly important.

In view of the above problems, the embodiments of the specification provide a method and system configured to protect user privacy in a personalized interaction service. By performing encoding processing on the privacy information of the user, an encoded vector corresponding to the privacy information is obtained, and then corresponding personalized reply content is obtained on the basis of the encoded vector, so that the user privacy information received by the service terminal 120 is no longer in plaintext during personalized interaction, and leakage of the user privacy information at the service terminal 120 is prevented.

The method and system configured to protect user privacy in a personalized interaction service provided by the embodiments of the specification will be described in detail below in combination with the drawings.

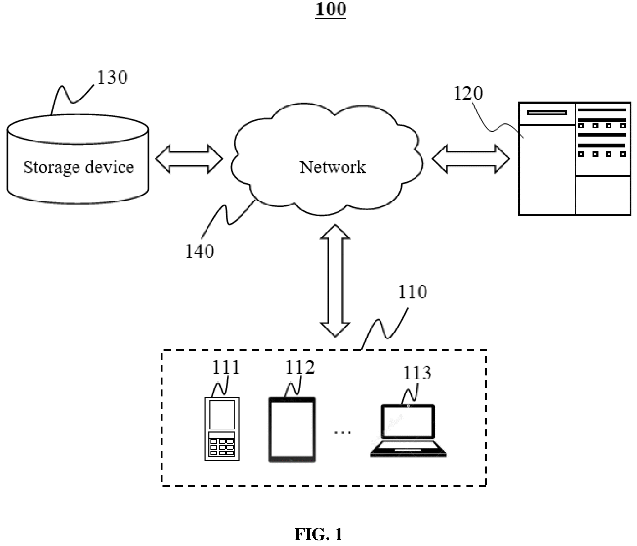

FIG. 1 is a schematic diagram of an exemplary application scenario of a system configured to protect user privacy in a personalized interaction service according to some embodiments of the specification.

With reference to FIG. 1, in some embodiments, an application scenario 100 of the system configured to protect user privacy in a personalized interaction service can include a user terminal 110, a service terminal 120, a storage device 130, and a network 140. Various components in the application scenario 100 can be connected in various manners. For example, the user terminal 110 can be connected to the service terminal 120 and/or the storage device 130 through the network 140, or can be directly connected to the service terminal 120 and/or the storage device 130. For another example, the service terminal 120 can be connected to the storage device 130 through the network 140 or directly connected to the storage device 130.

The user terminal 110 can receive, send, input, and/or output data. The data input by the user terminal 110 can include first data and/or operation instructions input by the user during an interaction process. In the embodiments of the specification, the first data can refer to interaction data input by the user during the interaction process, which can be in the form of text data, voice data, action data (for example, gesture data, nodding or shaking the head, blinking), and the like. By way of example, the user can ask questions by inputting text or voice. During the interaction process, the user terminal 110 can ask the user related personal information (that is, output an inquiry). At this time, the user can respond to the inquiry by inputting text, voice, or performing a specified action. It should be noted that, in the embodiments of the specification, the user terminal 110 can output the inquiry in the form of text, voice, or any other feasible form.

The data sent by the user terminal 110 can include the first data, operation instructions, or data obtained by processing on the basis of the first data and/or the operation instructions. For example, in some embodiments, the user terminal 110 can acquire personal information related to the user on the basis of the first data input by the user, and then determine privacy information from the personal information, and perform encoding processing on the privacy information to obtain an encoded vector corresponding to the privacy information, and finally send the encoded vector and at least some information in the first data to the service terminal 120 for processing. For another example, in some embodiments, the user terminal 110 can extract question information from the first data to obtain target question information, and then send a data acquisition instruction related to the target question information to the service terminal 120.

The data received by the user terminal 110 can include data issued by the service terminal 120 and/or data acquired from the storage device 130. For example, in some embodiments, the service terminal 120 can generate second data on the basis of the encoded vector and at least some information in the first data, and issue the second data to the user terminal 110. For another example, in some embodiments, the service terminal 120 can filter personal information related to question information included in the first data from preset information input by the user on the basis of a data acquisition instruction sent by the user terminal 110, and send the personal information to the user terminal 110. For another example, in some embodiments, the user terminal 110 can directly acquire personal information related to the target question information from preset information stored in the storage device 130. For yet another example, in some embodiments, the user terminal 110 can acquire pre-stored computer instructions from the storage device 130 and execute the computer instructions to implement the method configured to protect user privacy in a personalized interaction service described in the specification.

The data output by the user terminal 110 can include the inquiry and second data generated on the basis of the encoded vector and at least some information in the first data. It should be noted that, in the embodiments of the specification, the second data can include personalized reply content corresponding to the first data.

In some embodiments, the user terminal 110 can include a mobile device 111, a tablet computer 112, a laptop computer 113, or the like or any combination thereof. For example, the mobile device 111 can include a mobile phone, a personal digital assistant (PDA), an in-vehicle terminal, a dedicated mobile terminal, or the like or any combination thereof. In some embodiments, the user terminal 110 can include an input device and an output device, wherein the input device can include a keyboard, a touch screen, a microphone, a camera, and the like, and the output device can include a display, a speaker, and the like.

The service terminal 120 can process data and/or information acquired from the user terminal 110, the storage device 130, and/or other components of the application scenario 100. In some embodiments, the service terminal 120 can acquire the encoded vector corresponding to the privacy information and at least some information in the first data from the user terminal 110 or the storage device 130, and then process the encoded vector and the at least some information in the first data to obtain second data. In the embodiments of the specification, the second data includes personalized reply content corresponding to the first data. By presenting the second data to the user, personalized reply for the first data input by the user can be realized.

It should be noted that, in the embodiments of the specification, since the second data is obtained on the basis of the encoded vector corresponding to the privacy information, the second data can provide more precise and more personalized reply content for the user, thereby making human-computer interaction more realistic and the user more immersed, so as to achieve the effect of improving user experience. At the same time, in the embodiments of the specification, by performing encoding processing on the privacy information of the user to obtain the encoded vector and then sending the encoded vector to the service terminal 120 for processing, the user privacy information received by the service terminal 120 can be no longer in plaintext, thereby preventing leakage of the user privacy information at the service terminal 120.

In some embodiments, the service terminal 120 can receive a data acquisition instruction related to question information in the first data, and then acquire personal information related to the question information on the basis of the data acquisition instruction and send the personal information to the user terminal 110. In some embodiments, the service terminal 120 can receive target question information obtained by extracting the first data, and then filter personal information related to the target question information from preset information input by the user on the basis of the target question information, and detect whether the personal information satisfies a reply condition corresponding to the target question information. If satisfied, personal information related to the target question information is sent; if not satisfied, an inquiry instruction is sent at the same time as the personal information is sent, so as to perform a personal information inquiry for the target question information.

In some embodiments, the service terminal 120 can acquire pre-stored computer instructions from the storage device 130 and execute the computer instructions to implement the method configured to protect user privacy in a personalized interaction service described in the specification.

In some embodiments, the service terminal 120 can be a single server or a server group. The server group can be centralized or distributed. In some embodiments, the service terminal 120 can be local or remote. For example, the service terminal 120 can access information and/or data from the user terminal 110 or the storage device 130 through the network 140. For another example, the service terminal 120 can be directly connected to the user terminal 110 and/or the storage device 130 to access information and/or data. In some embodiments, the service terminal 120 can be implemented on a cloud platform. For example, the cloud platform can include a private cloud, a public cloud, a hybrid cloud, a community cloud, a distributed cloud, an inter-cloud, a multi-cloud, or the like or any combination thereof.

The network 140 can facilitate the exchange of information and/or data. The network 140 can include any suitable network capable of facilitating the exchange of information and/or data of the application scenario 100. In some embodiments, at least one component of the application scenario 100 (for example, the user terminal 110, the service terminal 120, or the storage device 130) can exchange information and/or data with at least one other component of the application scenario 100 through the network 140. For example, the service terminal 120 can acquire the encoded vector and at least some information in the first data from the user terminal 110 and/or the storage device 130 through the network 140. For another example, the service terminal 120 can acquire a data acquisition instruction from the user terminal 110 through the network 140, and issue personal information related to question information in the first data on the basis of the data acquisition instruction. For yet another example, the user terminal 110 can receive second data generated on the basis of the encoded vector and at least some information in the first data through the network 140.

In some embodiments, the network 140 can be any form of wired or wireless network, or any combination thereof. By way of example only, the network 140 can include a cable network, a wired network, a fiber optic network, a telecommunications network, an intranet, the Internet, a local area network (LAN), a wide area network (WAN), a wireless local area network (WLAN), a metropolitan area network (MAN), a public switched telephone network (PSTN), a Bluetooth network, a ZigBee network, a near field communication (NFC) network, or the like or any combination thereof. In some embodiments, the network 140 can include at least one network access point, and at least one component of the application scenario 100 can be connected to the network 140 through an access point to exchange data and/or information.

The storage device 130 can store data, instructions, and/or any other information. In some embodiments, the storage device 130 can store data acquired from the user terminal 110 and/or the service terminal 120. For example, the storage device 130 can store first data acquired by the user terminal 110; for another example, the storage device 130 can store an encoded vector obtained by encoding the privacy information; for yet another example, the storage device 130 can store second data generated on the basis of the encoded vector and at least some information in the first data. In some embodiments, the storage device 130 can store data and/or instructions used by the service terminal 120 to execute or use to complete the exemplary methods described in the specification. In some embodiments, the storage device 130 can include a mass storage device, a removable storage device, a volatile readwrite memory, a read-only memory (ROM), or the like or any combination thereof. An exemplary mass storage device can include a magnetic disk, an optical disk, a solid-state disk, and the like. In some embodiments, the storage device 130 can be implemented on a cloud platform. By way of example only, the cloud platform can include a private cloud, a public cloud, a hybrid cloud, a community cloud, a distributed cloud, an internal cloud, a multi-layer cloud, or the like or any combination thereof.

In some embodiments, the storage device 130 can be connected to the network 140 to communicate with at least one other component of the application scenario 100 (for example, the user terminal 110 or the service terminal 120). At least one component of the application scenario 100 can access data, instructions, or other information stored in the storage device 130 through the network 140. In some embodiments, the storage device 130 can be directly connected to or communicate with one or more components of the application scenario 100 (for example, the user terminal 110, the service terminal 120). In some embodiments, the storage device 130 can be a part of the user terminal 110 and/or the service terminal 120.

It should be noted that the above description of the application scenario 100 is merely for illustration and description, and does not limit the scope of application of the specification. For those skilled in the art, various corrections and changes can be made to the application scenario 100 under the guidance of the specification. However, these corrections and changes are still within the scope of the specification. For example, the user terminal 110 and the service terminal 120 can include more or fewer functional components.

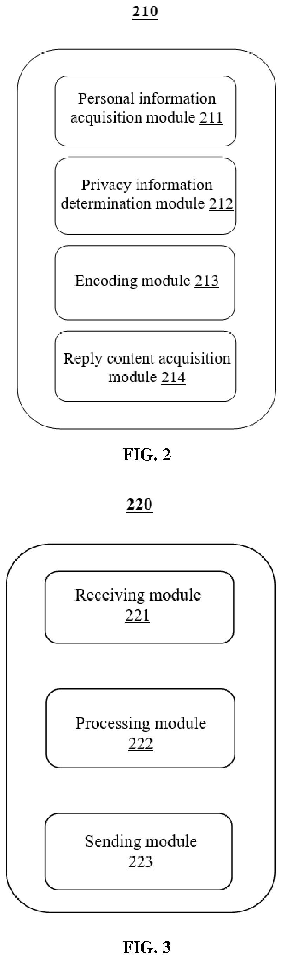

FIGS. 2 to 4 are module schematic diagrams of a system configured to protect user privacy in a personalized interaction service according to some embodiments of the specification. In some embodiments, the system configured to protect user privacy in a personalized interaction service shown in FIGS. 2 to 4 can be applied to the application scenario 100 shown in FIG. 1 in the form of software and/or hardware. For example, it can be configured in the user terminal 110 and/or the service terminal 120 in the form of software and/or hardware, so as to prevent leakage of user privacy information while providing personalized services.

With reference to FIG. 2, in some embodiments, a system 210 configured to protect user privacy in a personalized interaction service can include a personal information acquisition module 211, a privacy information determination module 212, an encoding module 213, and a reply content acquisition module 214. Each of the modules can be configured to implement the following functions at least.

The personal information acquisition module 211 can be configured to acquire personal information related to the user on the basis of first data input by the user.

The privacy information determination module 212 can be configured to determine privacy information from the personal information.

The encoding module 213 can be configured to perform encoding processing on the privacy information, so as to obtain an encoded vector corresponding to the privacy information.

The reply content acquisition module 214 can be configured to obtain second data generated on the basis of the encoded vector and at least some information in the first data, wherein the second data comprises personalized reply content corresponding to the first data.

It should be noted that, in some embodiments, the system 210 shown in FIG. 2 can be applied to the user terminal 110. In some embodiments, the system 210 shown in FIG. 2 can be applied to the service terminal 120.

With reference to FIG. 3, in some embodiments, a system 220 configured to protect user privacy in a personalized interaction service can include a receiving module 221, a processing module 222, and a sending module 223. Each of the modules can be configured to implement the following functions at least.

The receiving module 221 can be configured to receive an encoded vector and at least some information in first data input by a user, wherein the encoded vector is obtained by encoding the privacy information of the user.

The processing module 222 can be configured to process the encoded vector and at least some information in the first data by means of a trained second model, so as to obtain second data.

The sending module 223 can be configured to send the second data, so as to present personalized reply content corresponding to question information comprised in the first data to the user.

In some embodiments, the system 220 shown in FIG. 3 can be applied to the user terminal 110. In some embodiments, the system 220 shown in FIG. 3 can be applied to the service terminal 120.

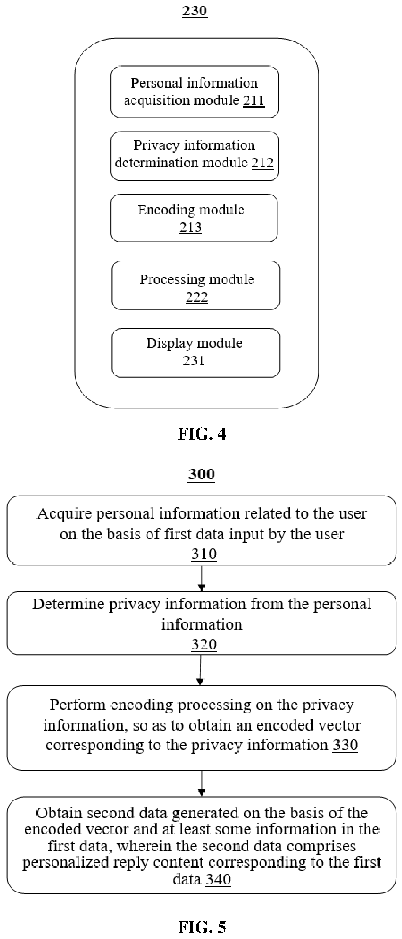

With reference to FIG. 4, in some embodiments, a system 230 configured to protect user privacy in a personalized interaction service can include the personal information acquisition module 211, the privacy information determination module 212, the encoding module 213, the processing module 222, and a display module 231. Each of the modules can be configured to implement the following functions at least.

The personal information acquisition module 211 can be configured to acquire personal information related to the user on the basis of first data input by the user.

The privacy information determination module 212 can be configured to determine privacy information from the personal information.

The encoding module 213 can be configured to perform encoding processing on the privacy information, so as to obtain an encoded vector corresponding to the privacy information.

The processing module 222 can be configured to process the encoded vector and at least some information in the first data by means of a trained second model, so as to obtain second data, the second data comprising personalized reply content corresponding to the first data.

The display module 231 can be configured to present the personalized reply content comprised in the second data to the user.

In some embodiments, the system 230 configured to protect user privacy in a personalized interaction service can further include a first sending module, a first receiving module, a second sending module, and a second receiving module. The first sending module can be configured to send the encoded vector and at least some information in the first data; the first receiving module can be configured to receive the encoded vector and at least some information in the first data; the second sending module can be configured to send the second data; and the second receiving module can be configured to receive the second data.

In some embodiments, the first sending module and the second receiving module can be a part of the reply content acquisition module 214. In some embodiments, the first receiving module can refer to the receiving module 221, or the first receiving module can be regarded as a part of the receiving module 221. Similarly, the second sending module can refer to the sending module 223, or the second sending module can be regarded as a part of the sending module 223.

More details about the above modules can be referred to in other parts of the specification (for example, the FIGS. 5 to 6 part and the related description thereof), and will not be described in detail here.

It should be understood that the system configured to protect user privacy in a personalized interaction service and the modules thereof shown in FIGS. 2 to 4 can be implemented in various manners. For example, in some embodiments, the system and the modules thereof can be implemented through hardware, software, or a combination of software and hardware. The hardware part can be implemented by means of dedicated logic; the software part can be stored in a memory and executed by an appropriate instruction execution system, such as a microprocessor or specially designed hardware. Those skilled in the art can understand that the above methods and systems can be implemented by using computer-executable instructions and/or processor control codes contained therein, for example, such codes are provided on a carrier medium such as a magnetic disk, a CD, or a DVD-ROM, a programmable memory such as a read-only memory (firmware), or a data carrier such as an optical or electronic signal carrier. The system and the modules thereof of the specification can be implemented not only by hardware circuits such as very large scale integrated circuits or gate arrays, semiconductors such as logic chips and transistors, or programmable hardware devices such as field programmable gate arrays and programmable logic devices, but also by software executed by various types of processors, and can also be implemented by a combination of the above hardware circuits and software (for example, firmware).

It should be noted that the above description of the system configured to protect user privacy in a personalized interaction service is provided only for illustrative purposes and is not intended to limit the scope of the specification. It can be understood that for those skilled in the art, according to the description of the specification, the modules can be arbitrarily combined or connected with other modules to constitute subsystems without departing from this principle. For example, the above modules can be different modules in one system, or the functions of two or more of the above modules can be implemented by one module. Such modifications are all within the protection scope of the specification. In some embodiments, the above modules can be a part of the service terminal 120 and/or the user terminal 110.

FIG. 5 is an exemplary flow chart of a method configured to protect user privacy in a personalized interaction service according to some embodiments of the specification. In some embodiments, a method 300 can be executed by processing logic, which can include hardware (for example, a circuit, dedicated logic, programmable logic, microcode, or the like), software (instructions running on a processing device to execute hardware simulation), or any combination thereof. In some embodiments, one or more operations in the flow chart of the method 300 configured to protect user privacy in a personalized interaction service shown in FIG. 5 can be implemented by the service terminal 120 and/or the user terminal 110 shown in FIG. 1. For example, the method 300 can be stored in the storage device 130 in the form of a computer program or instructions, and called and/or executed by the service terminal 120 and/or the user terminal 110.

With reference to FIG. 5, in some embodiments, the method 300 configured to protect user privacy in a personalized interaction service can include the following.

Step 310: acquiring personal information related to the user on the basis of first data input by the user. In some embodiments, step 310 can be executed by the personal information acquisition module 211.

In some embodiments, the user can input first data in the user terminal 110, the first data can include text data and/or voice data, and the user terminal 110 can process the first data or send the first data to the service terminal 120 for processing, so as to obtain reply content corresponding to the first data. In some embodiments, the user terminal 110 and/or the service terminal 120 can generate reply content corresponding to the first data on the basis of personal information of the user, so that the reply content is more precise and more in line with the actual needs of the user.

In some embodiments, the personal information acquisition module 211 can filter personal information related to question information included in the first data from preset information input by the user. The preset information input by the user can refer to information input by the user before interaction. For example, user identity information input when the user registers an account or modifies account information; for another example, role information input when the user sets an interaction role before starting interaction. In some embodiments, the user can set roles of both parties in the interaction before starting interaction, thereby performing interaction in the form of role-playing.

In some embodiments, the question information included in the first data can refer to question information extracted on the basis of the latest piece of data input by the user. In some embodiments, the question information included in the first data can refer to question information extracted by comprehensively analyzing the latest piece of data input by the user and historical data input by the user. In some embodiments, the personal information related to the question information included in the first data can refer to conditions that need to be considered in the process of answering the question information, and the conditions can include the user's own information and information related to the user (for example, environment information in which the user is located).

By way of example, when the question information input by the user is "I have symptoms of dizziness and nausea, what disease might I have?", the personal information related to the question information can include but is not limited to past medical history (such as heart disease, hypertension, and the like), eating conditions (such as using certain medications that may cause dizziness and nausea, drinking alcohol, eating food that may have a risk of poisoning, not eating for a long time, and the like), environmental factors (such as irritating odor, high/low temperature, altitude, and the like), recent activities (such as head impact, and the like), other symptoms (such as vomiting, headache, blurred vision, tinnitus, and the like), and the like.

In some embodiments, the personal information acquisition module 211 can further extract personal information related to the question information from the first data. The first data can refer to all data input by the user during the interaction process, which can include one or more pieces of data input by the user during the interaction process. In other words, in some embodiments, the personal information acquisition module 211 can extract personal information related to the question information from current interaction data and/or historical interaction data input by the user.

In some embodiments, the preset information can be input through the user terminal 110 and stored locally in the user terminal 110 (for example, configured in the storage device 130 local to the user terminal 110). The personal information acquisition module 211 extracts question information from the first data to obtain target question information. As above, in some embodiments, the personal information acquisition module 211 can extract question information on the basis of the latest piece of data input by the user to obtain the target question information. In some embodiments, the personal information acquisition module 211 can also comprehensively analyze the latest piece of data input by the user and historical data input by the user and then perform question information extraction to obtain the target question information. Further, the personal information acquisition module 211 can filter personal information related to the target question information from preset information stored locally in the user terminal 110.

In some embodiments, the personal information acquisition module 211 can filter personal information related to the target question information through a pre-configured relation table or model. By way of example, in some embodiments, personal information related to each question (or question type) can be pre-configured, and in a subsequent process, personal information related to the target question information can be filtered by means of table lookup. In some embodiments, a similarity between the target question information and a pre-configured preset question can be calculated, and when the similarity is greater than or equal to a preset threshold, related personal information corresponding to the preset question can be used as the personal information related to the target question information. In some embodiments, the preset threshold can be set according to actual requirements. For example, it can be set to 85% or some other larger or smaller value.

In some embodiments, the personal information related to the target question information can also be obtained by processing by means of a neural network model obtained by pre-training, and the neural network model can be trained by means of several sample questions and labels corresponding to the sample questions. The label can include related personal information corresponding to the sample question.

In some embodiments, the preset information can be input through the user terminal 110 and then sent to the service terminal 120 (for example, configured in the storage device 130 of the service terminal 120) for storage. The personal information acquisition module 211 can extract question information from the first data to obtain target question information, and then send a data acquisition instruction related to the target question information to the service terminal 120, and receive personal information related to the target question information issued by the service terminal 120 on the basis of the data acquisition instruction. It should be noted that, in the embodiments of the specification, the data acquisition instruction related to the target question information can be understood as an instruction configured to acquire personal information related to the target question. The instruction can include one or more pieces of personal information related to answering the target question information. In some embodiments, the data acquisition instruction can be generated on the basis of personal information required to answer the target question information.

In some embodiments, the personal information acquisition module 211 can extract personal information related to the target question from the first data input by the user. For example, the user can input first data to introduce his/her own situation during the interaction process, and the personal information acquisition module 211 can obtain personal information related to the target question by extracting the first data.

In some embodiments, the first data can include data input by the user in response to an inquiry of the user terminal 110. Specifically, in some embodiments, the personal information acquisition module 211 can detect whether personal information related to the target question information filtered from the preset information satisfies a reply condition corresponding to the question information. If the personal information filtered from the preset information already satisfies the reply condition of the target question information, it indicates that reply corresponding to the target question information can be completed on the basis of currently filtered information. At this time, subsequent processing can be performed on the basis of the personal information related to the target question information filtered from the preset information. On the contrary, if not satisfied, it indicates that the reply corresponding to the target question information cannot be completed on the basis of currently filtered information (for example, necessary conditions are missing). At this time, the user can be inquired to acquire required information, and then personal information related to the target question information is extracted from the first data input by the user in response to the inquiry.

In some embodiments, the personal information acquisition module 211 can query, by means of a pre-configured detection table, whether personal information related to the target question information filtered from the preset information satisfies the reply condition corresponding to the question information. Specifically, in some embodiments, the detection table can include necessary information corresponding to several preset questions. The personal information acquisition module 211 can query a preset question corresponding to the target question information in the detection table, and then compare the personal information related to the target question information filtered from the preset information with the necessary information corresponding to the preset question, so as to determine whether the personal information related to the target question information filtered from the preset information satisfies the reply condition corresponding to the question information. For example, when the personal information related to the target question information filtered from the preset information completely covers the necessary information corresponding to the target question information, it indicates that the reply condition corresponding to the question information is satisfied, and conversely, it is not satisfied.

In some embodiments, the personal information acquisition module 211 can acquire personal information related to the question information comprised in the first data by adopting any one of the above manners. In some embodiments, the personal information acquisition module 211 can simultaneously acquire personal information related to the question information comprised in the first data by means of both acquiring personal information from the preset information and acquiring personal information from the first data.

Step 320: determining privacy information from the personal information. In some embodiments, step 320 can be executed by the privacy information determination module 212.

Through step 310, personal information required to answer the target question information can be obtained. However, the personal information may contain some personal privacy that the user does not want to leak. Based on this, in some embodiments of the specification, in order to protect the personal privacy of the user, the privacy information determination module 212 can determine privacy information to be protected from the personal information obtained in step 310.

In some embodiments, the privacy information determination module 212 can determine privacy information to be protected from the personal information by means of sensitive word recognition. In some embodiments, the personal information can be presented to the user by means of the user terminal 110, and the privacy information determination module 212 can determine privacy information to be protected from the personal information in response to an operation of the user. By way of example, in some embodiments, the user terminal 110 can present the personal information obtained in step 310 to the user through a user interface, and the user can select or deselect privacy information to be protected by means of a touch screen, key operation, and/or voice. In some embodiments, the user terminal 110 can output the personal information obtained in step 310 to the user by means of voice, and the user can determine privacy information to be protected by means of a touch screen, key operation, and/or voice.

In some embodiments, considering that the user may hold back during preset information filling and the interaction process due to worry about privacy leakage (for example, not inputting all information or not inputting real information), but at the step of determining privacy information to be protected, a certain degree of trust may be increased, and therefore, there may be a need to supplement personal information at this time. Based on this, in order to satisfy the need of the user to supplement personal information, in some embodiments, the privacy information determination module 212 can add, in response to an operation of the user, additional information not included in the personal information (that is, the personal information determined in step 310), and use the additional information as privacy information to be protected.

In some embodiments, the additional information supplemented by the user may conflict with some information in the personal information (for example, the user input false information before supplementing the additional information). In this case, the privacy information determination module 212 can use the additional information to replace a corresponding part in the personal information determined in step 310.

In some embodiments, the additional information input by the user may use an informal expression. In view of this situation, in order to ensure that the additional information can be normally used in a subsequent process, semantic extraction can be performed on the additional information input by the user to obtain corresponding semantic text, and then the semantic text is used as privacy information to be protected.

Step 330: performing encoding processing on the privacy information, so as to obtain an encoded vector corresponding to the privacy information. In some embodiments, step 330 can be executed by the encoding module 213.

In some embodiments, in order to protect the privacy information and prevent the privacy information from leaking during application, the encoding module 213 can perform encoding processing on the privacy information determined in step 320 to obtain the encoded vector corresponding to the privacy information. In the specification, the encoded vector can have a mapping relationship with the privacy information. In other words, the encoded vector can contain the privacy information of the user. By converting the privacy information of the user into the encoded vector before use, not only can corresponding personalized reply content be generated on the basis of the personal information of the user (including the privacy information) in a subsequent process, but user privacy leakage caused during use can also be prevented, thereby improving both the precision of the personalized interaction service and the privacy security.

In some embodiments, the encoded vector can be obtained by processing the privacy information determined in step 320 by means of a trained first model. The first model can have an embedding function (that is, converting unstructured data such as text, image, and voice into structured vector data), which can convert the privacy information of the user into an encoded vector. The encoded vector refers to a vector in numerical representation into which text or voice data corresponding to the privacy information is converted. In some embodiments, the encoded vector can be a high-dimensional vector, which can contain features corresponding to multiple dimensions. In some embodiments, the high-dimensional vector can refer to a vector of which the quantity of vector parameters is greater than a specific threshold, such as 50, 100, 200, 1000, or the like. In some embodiments, the first model can be configured in the user terminal 110 or another third-party device recognized by both the user and the product provider. Regarding the training manner of the first model, reference can be made to other parts of the specification (for example, step 340 part and the related description thereof), and detailed description thereof will not be given here for the time being.

Step 340: obtaining second data generated on the basis of the encoded vector and at least some information in the first data, wherein the second data comprises personalized reply content corresponding to the first data. In some embodiments, step 340 can be executed by the reply content acquisition module 214.

After obtaining the encoded vector corresponding to the user privacy information through the above steps, the reply content acquisition module 214 can acquire second data generated on the basis of the encoded vector and at least some information in the first data, wherein the at least some information in the first data includes the question information, and the second data includes personalized reply content corresponding to the question information in the first data.

In some embodiments, the second data can be obtained by processing the encoded vector and at least some information in the first data by means of a trained second model. In some embodiments, the second model can be configured in the user terminal 110 or the service terminal 120. Specifically, when the second model is configured in the user terminal 110, the reply content acquisition module 214 can locally process the encoded vector and the question information comprised in the first data in the user terminal 110 to obtain the second data. When the second model is configured in the service terminal 120, the reply content acquisition module 214 can send the encoded vector and the question information comprised in the first data to the service terminal 120, and then receive the second data obtained by processing by the service terminal 120 on the basis of the encoded vector and the question information comprised in the first data.

In the embodiments of the specification, the second model is similar to the first model and can also have an embedding function. In some embodiments, the second model can include two training stages, wherein a first training stage (which can also be called a preliminary training stage) can be trained by using several pieces of sample personal information (plaintext data) and sample question information. After completion of the first training stage, the second model can acquire the ability to convert sample personal information into an encoded vector. In a subsequent process, the second model can be configured to process personal information that has not undergone encoding processing, as well as the question information comprised in the first data, to obtain a corresponding encoded vector.

In some embodiments, after the second model completes the first training stage, a part of the second model containing the embedding function (that is, the part generating the encoded vector) can be split out as the trained first model. In some embodiments, after the second model completes the first training stage, intermediate-layer data of the second model (for example, the sample personal information and the encoded vector corresponding thereto) can also be used as training data to train the first model to obtain the trained first model. By way of example only, in some embodiments, the sample personal information can be input into the first model, and an encoded vector obtained by processing the sample personal information by the second model after preliminary training can be used as a label to train the first model until a preset iteration number or loss threshold is reached, thereby obtaining the trained first model.

After training of the first model is completed, the first model can be configured to perform encoding processing on the privacy information of the user, so as to convert the privacy information into a corresponding encoded vector. Further, the encoded vector output by the first model and corresponding sample question information can be used as training data to perform secondary training on the second model, wherein the output corresponding to the encoded vector and the sample question information is sample reply content corresponding thereto, so that the second model acquires the ability to generate corresponding personalized reply content on the basis of the encoded vector and question information. In some embodiments, the second model can generate personalized reply content corresponding to the encoded vector and the question information on the basis of a knowledge graph.

It should be pointed out that, in the embodiments of the specification, by using intermediate-layer data of the second model after preliminary training as training data of the first model, and using the encoded vector output by the trained first model as input during secondary training of the second model, the second model can better learn a deviation between the first model and the second model, thereby further improving the precision of the second model. In some embodiments, by splitting out a part containing the Embedding function from the second model as the first model, the output of the first model and the input of the second model can be better matched, thereby reducing loss of information and noise, and meanwhile, the training efficiency and quality of the first model can also be improved, avoiding extra design and adjustment.

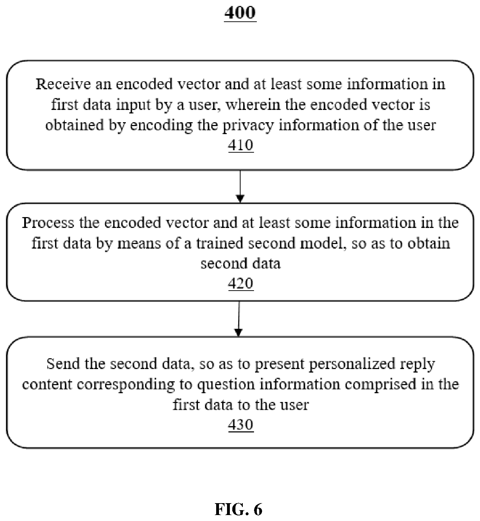

FIG. 6 is an exemplary flow chart of a method configured to protect user privacy in a personalized interaction service according to other embodiments of the specification. Similar to the method 300, the method 400 can be executed by processing logic. In some embodiments, one or more operations in the flow chart of the method 400 configured to protect user privacy in a personalized interaction service shown in FIG. 6 can be implemented by the service terminal 120 and/or the user terminal 110 shown in FIG. 1.

With reference to FIG. 6, in some embodiments, the method 400 configured to protect user privacy in a personalized interaction service can include the following.

Step 410: receiving an encoded vector and at least some information in first data input by a user, wherein the encoded vector is obtained by encoding the privacy information of the user. In some embodiments, step 410 can be executed by the receiving module 221.

In some embodiments, step 410 can be implemented by the user terminal 110 or the service terminal 120. Specifically, when step 410 is implemented by the user terminal 110, the receiving module 221 can receive an encoded vector and at least some information in first data input by the user, which are sent by other modules of the user terminal 110. When step 410 is implemented by the service terminal 120, the receiving module 221 can receive an encoded vector and at least some information in first data input by the user, which are sent by the user terminal 110. According to the above contents, in the embodiments of the specification, the at least some information in the first data includes question information. In some embodiments, the question information can be plaintext data or other processed data.

It should be noted that, in some embodiments, data received by the receiving module 221 can include but is not limited to the encoded vector and the question information comprised in the first data. For example, in some embodiments, the data received by the receiving module 221 can further include personal information related to the question information in the first data, which has not been encoded by the encoding module 213.

In some embodiments, the question information comprised in the first data and/or the personal information related to the question information in the first data, which has not been encoded by the encoding module 213, can also be encoded by the encoding module 213 to obtain an encoded vector. In other words, data received by the receiving module 221 can be an encoded vector obtained by performing encoding processing on the question information comprised in the first data, and an encoded vector obtained by performing encoding processing on all the personal information obtained in step 310.

Step 420: processing the encoded vector and at least some information in the first data by means of a trained second model, so as to obtain second data. In some embodiments, step 420 can be executed by the processing module 222.

Similar to step 410, step 420 can be implemented by the user terminal 110 or the service terminal 120. When the step is implemented by the user terminal 110, the second model can be configured in the user terminal 110. When the step is implemented by the service terminal 120, the second model can be configured in the service terminal 120. Regarding more content of the second model, reference can be made to other parts of the specification (for example, the related discussion in the FIG. 5 part), and detailed description thereof will not be given here.

Step 430: sending the second data, so as to present personalized reply content corresponding to question information comprised in the first data to the user. In some embodiments, step 430 can be executed by the sending module 223.

In some embodiments, step 430 can be implemented by the user terminal 110. Specifically, when the step is implemented by the user terminal 110, the sending module 223 can send the second data obtained by processing by the processing module 222 to other modules of the user terminal 110 (for example, a display module), so as to present personalized reply content corresponding to the question information comprised in the first data to the user.

In some embodiments, step 430 can also be implemented by the service terminal 120. When the step is implemented by the service terminal 120, the sending module 223 can send the second data obtained by processing by the processing module 222 to the user terminal 110, and present personalized reply content corresponding to the question information comprised in the first data to the user by means of the user terminal 110.

In some embodiments, steps 310 to 340 can be implemented by the user terminal 110, and steps 410 to 430 can all be implemented by the service terminal 120. During interaction between the user terminal 110 and the service terminal 120, the user terminal 110 can extract question information from the first data to obtain target question information, and then send a data acquisition instruction related to the target question information to the service terminal 120. Further, the service terminal 120 can receive the data acquisition instruction, and acquire personal information related to the target question information on the basis of the data acquisition instruction, and then send the personal information related to the target question information to the user terminal 110. Finally, the user terminal 110 can receive personal information related to the target question information issued by the service terminal 120 on the basis of the data acquisition instruction.

In some embodiments, the user terminal 110 can extract question information from the first data to obtain target question information, and then send the target question information to the service terminal 120. Further, the service terminal 120 can receive the target question information, and filter personal information related to the target question information from preset information input by the user on the basis of the target question information. Subsequently, the service terminal 120 can detect whether the personal information related to the target question information satisfies a corresponding reply condition. If satisfied, the personal information related to the target question information is sent to the user terminal 110. If not satisfied, an inquiry instruction is sent to the user terminal 110 at the same time as the personal information related to the target question information is sent, so as to perform a personal information inquiry for the target question information, thereby guiding the user to supplement necessary information configured to answer the target question information.

It should be noted that, in the embodiments of the specification, by sending an inquiry instruction to guide the user to supplement necessary information configured to answer the target question information when it is detected that current information does not satisfy the reply condition corresponding to the target question information, reference information can be more comprehensive, and personalized reply content obtained in a subsequent processing process can be more accurate, thereby improving user experience.

In summary, beneficial effects that may be brought by the embodiments of the specification include but are not limited to: (1) in the method and system configured to protect user privacy in a personalized interaction service provided by some embodiments of the specification, by converting the privacy information of the user into the encoded vector before use, not only can corresponding personalized reply content be generated on the basis of personal information including user privacy information, but user privacy leakage caused during information usage can also be prevented, thereby improving the security of the user privacy information while improving the precision of a personalized interaction service; (2) in the method and system configured to protect user privacy in a personalized interaction service provided by some embodiments of the specification, by using intermediate-layer data of the second model after preliminary training as training data of the first model, and using the encoded vector output by the trained first model as input during secondary training of the second model, the second model can better learn a deviation between the first model and the second model, thereby further improving the precision of the second model; (3) in the method and system configured to protect user privacy in a personalized interaction service provided by some embodiments of the specification, by splitting out a part containing the embedding function from the second model as the first model, the output of the first model and the input of the second model can be better matched, thereby reducing loss of information and noise, and meanwhile, the training efficiency and quality of the first model can also be improved, avoiding extra design and adjustment; and (4) in the method and system configured to protect user privacy in a personalized interaction service provided by some embodiments of the specification, by sending an inquiry instruction to guide the user to supplement necessary information configured to answer the target question information when it is detected that current information does not satisfy the reply condition corresponding to the target question information, reference information can be more comprehensive, and personalized reply content obtained in a subsequent processing process can be more accurate, thereby improving user experience.

It should be noted that beneficial effects that may be produced by different embodiments are different, and in different embodiments, the beneficial effects that may be produced can be any one or more of the above combinations, or can be any other possible beneficial effects.

The embodiments of the specification further provide a computer-readable storage medium, which can be configured to store computer instructions which, when executed by a processor, can implement the method configured to protect user privacy in a personalized interaction service described in any one of the embodiments of the specification. Regarding more content of the method, reference can be made to the above, and detailed description thereof will not be given here.

The embodiments of the specification further provide a computer program product, comprising a computer program or instructions which, when executed by a processor, implement the method configured to protect user privacy in a personalized interaction service described in any one of the embodiments of the specification.

The basic concepts have been described above. Obviously, for those skilled in the art, the above detailed disclosure is merely an example and does not constitute a limitation on the specification. Although not explicitly stated herein, those skilled in the art can make various modifications, improvements, and corrections to the specification. Such modifications, improvements, and corrections are suggested in the specification, and therefore, such modifications, improvements, and corrections are still within the spirit and scope of the exemplary embodiments of the specification.

Meanwhile, the specification uses specific words to describe embodiments of the specification. Terms such as "one embodiment", "an embodiment", and/or "some embodiments" mean that a certain feature, structure, or characteristic related to at least one embodiment of the specification is described. Therefore, it should be emphasized and noted that references to "an embodiment" or "one embodiment" or "an alternative embodiment" at different positions in the specification are not necessarily referring to the same embodiment. Furthermore, certain features, structures, or characteristics in one or more embodiments of the specification can be appropriately combined.

Furthermore, those skilled in the art can understand that various aspects of the specification can be described and illustrated by several patentable species or cases, including any new and useful process, machine, product, or composition of matter, or any new and useful improvements thereto. Accordingly, all aspects of the specification can be completely executed by hardware, can be completely executed by software (including firmware, resident software, microcode, or the like), or can be executed by a combination of hardware and software. The above hardware or software can all be referred to as a "data block", "module", "engine", "unit", "component", or "system". Furthermore, various aspects of the specification may be in the form of a computer product located in one or more computer-readable media, the product including computer-readable program code.

A computer storage medium may contain a propagated data signal having computer program code embodied therein, for example, on a baseband or as part of a carrier. The propagated signal can have multiple manifestations, including electromagnetic form, optical form, or a suitable combination thereof. A computer storage medium can be any computer-readable medium other than a computer-readable storage medium, which can be connected to an instruction execution system, apparatus, or device to communicate, propagate, or transmit a program for use. Program code on the computer storage medium can be propagated through any suitable medium, including radio, cable, fiber optic cable, RF, or similar media, or any combination of the above.

The computer program code required for each part of operation of the specification can be written in any one or more programming languages, including object-oriented programming languages such as Java, Scala, Smalltalk, Eiffel, JADE, Emerald, C++, C#, VB.NET, Python, and the like, conventional procedural programming languages such as C, Visual Basic, Fortran2003, Perl, COBOL2002, PHP, ABAP, dynamic programming languages such as Python, Ruby, and Groovy, or other programming languages. The program code can run entirely on a user computer, or as an independent software package running on a user computer, or partly on a user computer and partly on a remote computer, or entirely on a remote computer or processing device. In the latter case, the remote computer can be connected to the user computer through any network form, such as a local area network (LAN) or a wide area network (WAN), or connected to an external computer (for example, through the Internet), or in a cloud computing environment, or used as a service such as software as a service (SaaS).

Furthermore, unless explicitly stated in the claims, the order of processing elements and sequences described in the specification, the use of numbers and letters, or the use of other names, are not configured to limit the order of the processes and methods of the specification. Although the above disclosure discusses some currently considered useful embodiments of the invention through various examples, it should be understood that such details are merely for illustrative purposes, and the appended claims are not limited to the disclosed embodiments. On the contrary, the claims are intended to cover all modifications and equivalent combinations that conform to the substance and scope of the embodiments of the specification. For example, although the above-described system components can be implemented by hardware devices, they can also be implemented by a software solution only, such as installing the described system on an existing processing device or mobile device.

Similarly, it should be noted that in order to simplify the disclosure of the specification and thus help understand one or more of the various inventive aspects, the above description of the embodiments of the specification sometimes combines various features in one embodiment, drawing, or description thereof. However, this disclosure method does not mean that the features required by the objects of the specification are more than those mentioned in the claims. In fact, the features of the embodiments are less than all the features of the above-disclosed single embodiments.

Finally, it should be understood that the embodiments described in the specification are only used to illustrate the principles of the embodiments of the specification. Other variations may also fall within the scope of the specification. Accordingly, as examples rather than limitations, alternative configurations of the embodiments of the specification can be considered consistent with the teachings of the specification. Accordingly, the embodiments of the specification are not limited to the embodiments explicitly introduced and described in the specification.

### INDUSTRIAL APPLICABILITY

By adopting the above solution, by performing encoding processing on the privacy information of the user to obtain the encoded vector corresponding to the privacy information, and then obtaining corresponding personalized reply content on the basis of the encoded vector, not only can corresponding personalized reply content be generated on the basis of personal information including user privacy information, but user privacy leakage caused during information usage can also be prevented, thereby improving the security of the user privacy information while improving the precision of a personalized interaction service.

## Claims

1. A method configured to protect user privacy in a personalized interaction service, **characterized in that** the method comprises:
acquiring personal information related to a user on a basis of first data input by the user;
determining privacy information from the personal information;
performing encoding processing on the privacy information, so as to obtain an encoded vector corresponding to the privacy information; and
obtaining second data generated on the basis of the encoded vector and at least some information in the first data, wherein the second data comprises personalized reply content corresponding to the first data.

2. The method of claim 1, wherein the acquiring the personal information related to the user on the basis of the first data input by the user comprises:
filtering personal information related to question information comprised in the first data from preset information input by the user, and/or extracting personal information related to the question information from the first data.

3. The method of claim 2, wherein the preset information is input through a user end and stored locally in the user end, and the filtering the personal information related to the question information comprised in the first data from the preset information input by the user comprises:
extracting question information from the first data to obtain target question information; and filtering personal information related to the target question information from the preset information.

4. The method of claim 2, wherein the preset information is input through a user end and sent to a service end for storage, and the filtering the personal information related to the question information comprised in the first data from the preset information input by the user comprises:
extracting question information from the first data to obtain target question information; and sending a data acquisition instruction related to the target question information to the service end, and receiving personal information related to the target question information issued by the service end on the basis of the data acquisition instruction.

5. The method of claim 2, wherein the extracting the personal information related to the question information from the first data comprises:
detecting whether personal information related to the question information comprised in the first data filtered from preset information input by the user satisfies a reply condition corresponding to the question information; and
when the reply condition is not satisfied, inquiring the user, and extracting personal information related to the question information from first data input by the user in response to
the inquiry.

6. The method of claim 5, wherein the detecting whether the personal information related to the question information comprised in the first data filtered from the preset information input by the user satisfies the reply condition corresponding to the question information comprises:
querying, by means of a pre-configured detection table, whether the personal information filtered from the preset information satisfies the reply condition corresponding to the question information, wherein the detection table comprises necessary information corresponding to a plurality of preset questions;
determining that the filtered personal information satisfies the reply condition corresponding to the question information when the filtered personal information comprises the necessary information corresponding to the question information; and
determining that the filtered personal information does not satisfy the reply condition corresponding to the question information when the filtered personal information does not comprise the necessary information corresponding to the question information.

7. The method of any one of claims 1 to 6, wherein the determining the privacy information from the personal information comprises:
presenting the personal information to the user, and determining the privacy information from the personal information in response to an operation of the user, wherein the operation of the user at least comprises selecting privacy information to be protected.

8. The method of any one of claims 1 to 7, wherein the determining the privacy information from the personal information further comprises:
adding, in response to an operation of the user, additional information not comprised in the personal information, and using the additional information as privacy information to be protected.

9. The method of claim 8, wherein the method further comprises:
replacing a corresponding part in the personal information according to the additional information.

10. The method of claim 8 or 9, wherein the using the additional information as the privacy information to be protected comprises:
performing semantic extraction on the additional information to obtain corresponding semantic text; and
using the semantic text as the privacy information.

11. The method of any one of claims 1 to 10, wherein the encoded vector is obtained by processing the privacy information by means of a trained first model, and the second data is obtained by processing the encoded vector and at least some information in the first data by means of a trained second model, wherein
the trained first model is obtained by training on the basis of intermediate-layer data of a second model after preliminary training or by splitting from the second model after preliminary training, and the trained second model is obtained by performing secondary training on the basis of output data of the trained first model.

12. A method configured to protect user privacy in a personalized interaction service, **characterized in that** the method comprises:
receiving an encoded vector and at least some information in first data input by a user, wherein the encoded vector is obtained by encoding the privacy information of the user;
processing the encoded vector and the at least some information in the first data by means of a trained second model, so as to obtain second data; and
sending the second data, so as to present personalized reply content corresponding to question information comprised in the first data to the user.

13. The method of claim 12, wherein the encoded vector is obtained by processing the privacy information by means of a trained first model, the trained first model is obtained by training on the basis of intermediate-layer data of a second model after preliminary training or by splitting from the second model after preliminary training, and the trained second model is obtained by performing secondary training on the basis of output data of the trained first model.

14. The method of claim 12 or 13, wherein before receiving the encoded vector and at least some information in the first data input by the user, the method further comprises:
receiving a data acquisition instruction related to the question information; and
acquiring personal information related to the question information on the basis of the data acquisition instruction, and sending the personal information related to the question information.

15. The method of any one of claims 12 to 14, wherein before receiving the encoded vector and at least some information in the first data input by the user, the method further comprises:
receiving target question information obtained by extracting the first data;
filtering personal information related to the target question information from preset information input by the user on the basis of the target question information;
detecting whether the personal information related to the target question information satisfies a reply condition corresponding to the target question information; and
sending the personal information related to the target question information when the personal information satisfies the reply condition; and when the personal information does not satisfy the reply condition, sending an inquiry instruction at the same time as sending the personal information related to the target question information, so as to perform a personal information inquiry for the target question information.

16. A system configured to protect user privacy in a personalized interaction service, **characterized in that** the system comprises:
a personal information acquisition module configured to acquire personal information related to the user on the basis of first data input by the user;
a privacy information determination module configured to determine privacy information from the personal information;
an encoding module configured to perform encoding processing on the privacy information, so as to obtain an encoded vector corresponding to the privacy information; and
a reply content acquisition module configured to obtain second data generated on the basis of the encoded vector and at least some information in the first data, wherein the second data comprises personalized reply content corresponding to the first data.

17. A system configured to protect user privacy in a personalized interaction service, **characterized in that** the system comprises:
a receiving module configured to receive an encoded vector and at least some information in first data input by a user, wherein the encoded vector is obtained by encoding the privacy information of the user;
a processing module configured to process the encoded vector and the at least some information in the first data by means of a trained second model, so as to obtain second data; and
a sending module configured to send the second data, so as to present personalized reply content corresponding to question information comprised in the first data to the user.

18. A system configured to protect user privacy in a personalized interaction service, **characterized in that** the system comprises:
a personal information acquisition module configured to acquire personal information related to the user on the basis of first data input by the user;
a privacy information determination module configured to determine privacy information from the personal information;
an encoding module configured to perform encoding processing on the privacy information, so as to obtain an encoded vector corresponding to the privacy information;
a processing module configured to process the encoded vector and the at least some information in the first data by means of a trained second model, so as to obtain second data, the second data comprising personalized reply content corresponding to the first data; and
a display module configured to present the personalized reply content comprised in the second data to the user.

19. A computer-readable storage medium, **characterized in that** the storage medium stores computer instructions which, when executed by a processor, implement the method of any one of claims 1 to 15.

20. A computer program product, **characterized by** comprising a computer program or instructions which, when executed by a processor, implement the method of any one of claims 1 to 15
